# EUROPEAN PATENT APPLICATION

(11) **EP 4 752 189 A1**
(43) Date of publication of application: **03.06.2026**
(21) Application number: 24863234.1
(22) Date of filing: 05.09.2024
(51) Int. Cl.: C09K 21/02, C09K 21/00

(54) **INORGANIC FLAME RETARDANT PARTICLES AND METHOD FOR MANUFACTURING SAME**

(30) Priority: 05.09.2023 KR 20230117921
(71) Applicant: Sukgyung At Co., Ltd., Ansan-si, Gyeonggi-do 15599 (KR)
(72) Inventor: YOU, Young Chul, Ansan-si, Gyeonggi-do 15484 (KR); KWON, O Sung, Gunpo-si, Gyeonggi-do 15882 (KR); KIM, Dae Yong, Ansan-si, Gyeonggi-do 15440 (KR); LEE, Nam Gyu, Siheung-si, Gyeonggi-do 15070 (KR)
(74) Representative: ABG Intellectual Property Law, S.L.
(86) International application number: PCT/KR2024/013451
(87) International publication number: WO 2025/053655

(57) **Abstract**

The present invention enables the simple and economic manufacture of a flame retardant that has a higher thermal decomposition temperature than simple aluminum hydroxide and magnesium hydroxide, which are mainly used as construction flame retardants, and exhibits superior flame retardancy, thus having great industrial applicability.

## Description

### TECHNICAL FIELD

The present invention disclosed herein relates to an inorganic composite flame retardant capable of significantly improving flame retardancy.

### BACKGROUND ART

Flame retardants, which are substances added to or coated on organic materials such as flammable plastics to suppress or mitigate combustion, contain toxicity fatal to the human body, and thus serious safety issues are being raised due to the generation of substantial amounts of toxic gases in an event of a fire.

In addition, it has been confirmed that most chemicals used as flame retardants have direct or indirect impacts on hormonal imbalances and disruption, brain damage, liver damage, and carcinogenesis. In Korea, flame retardants containing hazardous substances such as chlorine and bromine are widely used. Bromine-based flame retardants are known to be carcinogenic and can disrupt hormonal balance.

In order to fundamentally resolve these drawbacks, it has been necessary to develop a new type of non-toxic flame retardant, which is a material harmless to the human body, aligning well with the decomposition temperatures of various plastics, having inherently excellent flame retardancy without emitting toxic gases, and providing smoke suppression effects, ensuring a high level of safety.

### DISCLOSURE OF THE INVENTION

### TECHNICAL PROBLEM

The present invention provides a method for manufacturing an inorganic composite flame retardant that may significantly improve flame retardancy by applying to materials for construction, polymer materials, artificial leather, textile materials, electronic components, and various plastics.

The present invention also provides a method for manufacturing a ceramic composite flame retardant capable of significantly improving the flame retardancy of aluminum hydroxide, magnesium hydroxide, and the like, which are general inorganic flame retardants.

The present invention also provides materials for construction, polymer materials, artificial leather, textile, electronic components, and various plastics which are processed with the above flame retardant and thus have excellent flame retardancy.

### TECHNICAL SOLUTION

In accordance with an embodiment of the present invention, a method of manufacturing an inorganic Mg(OH)₂.Ca(OH)₂ flame retardant particle, having a whiteness of 60 or greater, an average particle diameter of 0.2 to 3 µm, a specific surface area of 1 to 20 m²/g, and a purity of 90% or greater, includes a step of pulverizing a dolomite [CaMg(CO₃)₂] particle having a whiteness of 60 or greater, a Mg(OH)₂.Ca(OH)₂ purity of 90% or greater, and an average particle diameter of 5 to 8 mm;
a step of hydrating the dolomite [CaMg(CO₃)₂] particle with alkali through an alkali-aggregate reaction (AAR);
a step of adding a surface-treating agent to an aqueous dispersion of a hydrated composite of calcium hydroxide and magnesium hydroxide to hydrophobize a surface of the composite;
a step of collecting the composite from the aqueous dispersion of the hydrophobized surface-treated composite via filtration; and
a step of drying the composite.

In the hydrating step, pH may be adjusted to a range of 8 to 12 and hydration may be performed by stirring for 3 to 4 hours at a temperature of 45°C to 55°C.

The synthesized composite may have a molar ratio of Ca(OH)₂: Mg(OH)₂ =1:0.9 to 1.1:1.

In addition, the particle of the present invention may be surface-treated with a hydrophobizing agent such as a fatty acid or silane compound on a surface of the inorganic flame retardant, thereby having hydrophobicity with a contact angle of 90° or higher. The silane compound may include one or more functional groups selected from the group consisting of vinyl, epoxy, styryl, methacryloxy, acryloxy, amino, ureide, mercapto, and isocyanate, and hydrolyzing may be performed for 1 to 3 hours using water or a hydroxyl group-containing solvent prior to treatment of ceramic.

In accordance with an embodiment of the present invention, an inorganic flame retardant particle manufactured according to a manufacturing method of the present invention, has a whiteness of 60 or greater, an average particle diameter of 0.2 to 3 µm, a specific surface area of 1 to 20 m²/g, and a purity of 90% or greater.

### ADVANTAGEOUS EFFECTS

According to a manufacturing method of the present invention using dolomite, an inorganic composite flame retardant having excellent flame retardancy may be manufactured by maximizing a synergy effect through acceleration of flame retardant characteristics via magnesium- calcium hybridization.

In addition, an inorganic composite flame retardant may be manufactured with high productivity through eco-friendly and simplified manufacturing processes. An inorganic flame retardant having reduced toxicity and improved compatibility, flame retardancy, and economic feasibility may be manufactured.

### BRIEF DESCRIPTION OF THE DRAWINGS

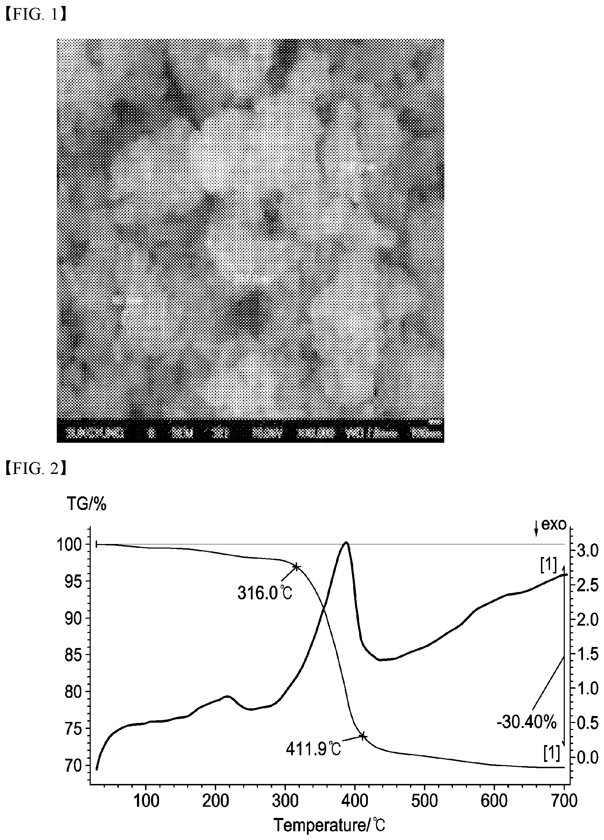

FIG. 1 is a TEM image of a flame retardant particle of the present invention,
FIG. 2 is a thermogravimetry-differential thermal analysis (TG-DTA) graph of Mg(OH)₂,

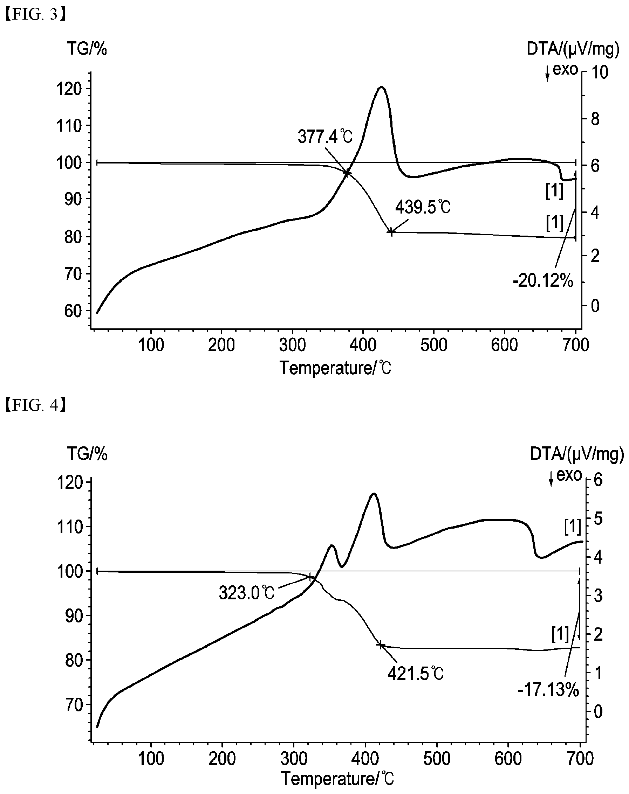

FIG. 3 is a TG-DTA graph of Ca(OH)₂,
FIG. 5 is TG-DTA of CaMg(OH)₂,

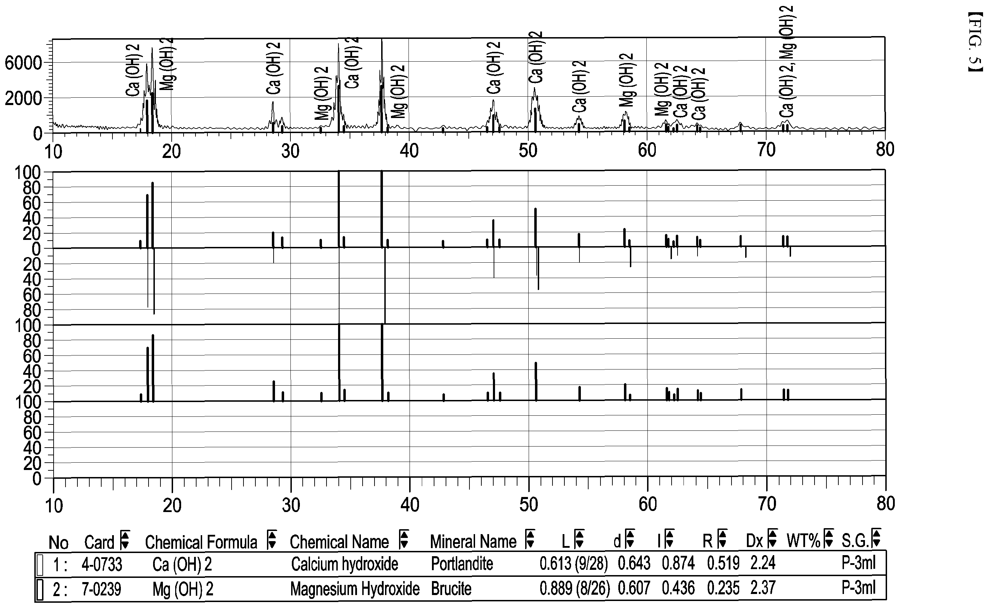

FIG. 5 is an inorganic flame retardant manufactured from dolomite through AAR.

### MODE FOR CARRYING OUT THE INVENTION

The present invention relates to a method of manufacturing a ceramic composite flame retardant, which improves flame retardancy and physical properties, using a dolomite [CaMg(CO₃)₂] raw material having a size of 5 to 8 mm and a ceramic-based flame retardant composition manufactured from the same.

The manufacturing method of the present invention will be described below.

### 1. Pulverization of dolomite

To prepare a ceramic composite flame retardant, a dolomite [CaMg(CO₃)₂] particle obtained from Sambo Mining, which has a whiteness of 60 or greater, a purity of 90% or greater, and an average particle diameter of 5 to 8 mm, is pulverized using a ceramic pulverizer of Jaw Crusher.

### 2. Calcination

The dolomite particle pulverized using Jaw Crusher is charged into a commercial heat-treatment electric furnace and is subjected to a heat treatment at a temperature of 1000°C or greater for 4 hours to manufacture light-burned dolomite.

### 3. Hydration

Dolomite powder obtained after the heat treatment is hydrated using pure water.

To equalize hydration rates of CaO and MgO, a temperature of hydration water is adjusted to a range of 45°C and 55°C and is stirred for 3 to 4 hours.

### 4. Hydration without calcination process

The dolomite powder obtained by the pulverizing is hydrated by adding sodium hydroxide using pure water to adjust pH to a range of 8 to 12.

To equalize the hydration rates of CaO and MgO, a temperature of hydration water is adjusted to a range of 45°C and 55°C and is stirred for 3 to 4 hours.

### 5. Surface treatment

A nano inorganic ceramic-based flame retardant prepared according to the process above may be surface-treated with a silane-based compound, as needed.

A surface of the ceramic-based flame retardant is in a hydrated form with -OH. A silane compound having an organic functional group is used as a coupling agent, and thus the ceramic surface may be surface-treated with silane having a desired functional group. It is preferable to select the silane compound from those having excellent compatibility with the ceramic composite flame retardant, and for example, at least one functional group selected from the group consisting of vinyl, epoxy, styryl, methacryloxy, acryloxy, amino, ureide, mercapto, and isocyanate, may be included, but an embodiment of the present invention is not limited thereto. It is preferable to select an amino silane-based compound among the silane compounds.

The silane coupling agent may be hydrolyzed before being treated on ceramic. The hydrolysis may be performed using water or a solvent having a hydroxyl group, and preferably, it is preferable to use alcohol or ethanol for stability. Time of hydrolysis may be preferably 1 hour or more, and more preferably 1 to 3 hours.

The surface-treatment may be performed through a drying method, or a wet method. It is preferable to carry out the process through a wet method in order to improve process efficiency. For both dry and wet surface treatment methods, the silane coupling agent may be added in an amount of 0.5 to 10 wt% based on a powder (filler) weight.

### 6. Dry

The inorganic flame retardant which is surface-treated by a wet method is collected as a cake through a filter and dried at 90°C for 24 hours to obtain a final inorganic flame retardant. In addition, in order to simplify processes, the surface-treatment may be performed through a drying process.

### 7. Flame retardant properties

As indicated by the TG-DTA results, the hydrated dolomite exhibits excellent flame retardancy due to a two-step release of water during thermal decomposition of the present invention at around 323°C and 421.5°C as a temperature of a combustible material increases.

### Example 1; Synthesis and hydrophobic coating of hydrated dolomite particles

(1) Dolomite [CaMg(CO₃)₂] is loaded into an alumina saggar at approximately 80% capacity and calcined at 1000°C for 2 hours, with a heating rate of 3°C/min.
(2) 100 g of light-burned dolomite obtained in (1) is slowly added to 500 g of ultrapure water (H₂O) and hydrated by stirring at approximately 50°C for 4 hours.
(3) Subsequently, the obtained hydrated dolomite (Ca(OH)₂.Mg(OH)₂) is surface-treated with a hydrolyzed silane coupling agent.
(4) Subsequently, the obtained surface-coated hydrate is filtered to obtain a cake, and the cake is placed in a convection dryer and dried at 90°C for 24 hours.
(5) After drying, hydrated dolomite was obtained.
(6) TG-DTA, XRD, and SEM analyses were performed on the hydrated dolomite obtained from process (5). In particular, a thermal analysis can confirm successful synthesis of the inorganic composite flame retardant which releases water at around 300°C, and 400°C.

### Example 2: Synthesis and hydrophobic coating of hydrated dolomite particles

(1) Pulverized dolomite [CaMg(CO₃)₂] is slowly added to ultrapure water (H₂O), and then the pH is adjusted up to 11 by adding sodium hydroxide, followed by stirring for 4 hours.
(2) Subsequently, the obtained hydrated dolomite (Ca(OH)₂.Mg(OH)₂) is surface-treated using a hydrolyzed silane coupling agent.
(3) Subsequently, the obtained surface-coated hydrate is filtered to obtain a cake, and the cake is placed in a convection dryer and dried at 90°C for 24 hours.
(4) After drying, hydrated dolomite was obtained.
(5) TG-DTA, XRD, and SEM analyses were performed on the hydrated dolomite obtained from process (4). In particular, the thermal analysis can confirm successful synthesis of the inorganic composite flame retardant which releases water at around 300°C, and 400°C.

## Claims

1. A method of manufacturing an inorganic Mg(OH)₂.Ca(OH)₂ flame retardant particle which has a whiteness of 60 or greater, an average particle diameter of 0.2 to 3 µm, a specific surface area of 1 to 20 m²/g, and a purity of 90% or greater, the method comprising:
a step of pulverizing a dolomite [CaMg(CO₃)₂] particle having a whiteness of 60 or greater, a Mg(OH)₂.Ca(OH)₂ purity of 90% or greater, and an average particle diameter of 5 to 8 mm;
a step of hydrating the dolomite [CaMg(CO₃)₂] particle with alkali through an alkali-aggregate reaction (AAR);
a step of adding a surface-treating agent to an aqueous dispersion of a hydrated composite of calcium hydroxide and magnesium hydroxide to hydrophobize a surface of the composite;
a step of collecting the composite from the aqueous dispersion of the hydrophobized surface-treated composite via filtration; and
a step of drying the composite.

2. The manufacturing method of claim 1, wherein pH is adjusted to 8 to 12 and hydration is performed by stirring for 3 to 4 hours at a temperature of 45°C to 55°C.

3. The manufacturing method of claim 1, wherein the synthesized composite has a molar ratio of Ca(OH)₂ : Mg(OH)₂ =1:0.9 to 1.1:1.

4. The manufacturing method of claim 1, wherein the inorganic flame retardant is surface-treated with a hydrophobizing agent such as a fatty acid or silane compound to have hydrophobicity with a contact angle of 90° or higher.

5. The manufacturing method of claim 1, wherein the silane compound includes one or more functional groups selected from the group consisting of vinyl, epoxy, styryl, methacryloxy, acryloxy, amino, ureide, mercapto, and isocyanate, and hydrolyzing is performed for 1 to 3 hours using water or a hydroxyl group-containing solvent prior to treatment of ceramic.

6. An inorganic Mg(OH)₂. Ca(OH)₂ flame retardant particle wherein a whiteness is 60 or greater, an average particle diameter is 0.2 to 3 µm, a specific surface area is 1 to 20 m²/g, and a purity is 90% or greater.
